# EUROPEAN PATENT APPLICATION

(11) **EP 1 410 711 A1**
(43) Date of publication of application: **21.04.2004**
(21) Application number: 01972110.9
(22) Date of filing: 28.09.2001
(51) Int. Cl.: A01G 25/09

(54) **DEVICE FOR APPLYING AGROCHEMICALS THAT CAN BE INSTALLED ON A MOBILE STRUCTURE**

(30) Priority: 29.09.2000 ES 200002367
(71) Applicant: Justribo Baradad, Antonio, 25100 Almacelles (ES)
(72) Inventor: JUSTRIBO BARADAD, Antonio, E-25100 Almacelles (ES); PALACIN ROCA, Jordi, E-25100 Almacelles (ES); ZANUY FONTANET, Carles, E-25100 Almacelles (ES); ARNO SATORRA, Jaume, E-25100 Almacelles (ES)
(74) Representative: Manresa Val, Manuel
(86) International application number: PCT/ES2001/000366
(87) International publication number: WO 2002/026026

(57) **Abstract**

Device for agrochemical application which can be installed on a moving structure (24) such as that of a moving irrigation equipment (1), such moving structure (24) is of the kind comprising high lengths sustained by at least one of its ends by a rolling tower (11) self-propelled by wheels (14) driven by a motor (9), which can be intermittently displaced and at a substantially constant speed, comprising a series of nozzles (7) suitable for spraying agrochemicals, located at a constant or variable distance along such moving structure, such nozzles (7) being in communication with a duct (4) and operating a supply regulated by electrically powered valves (8) which operate according to opening-closing cycles driven by electronic controlling devices (10) for the supply timing from a signal relative to the moving structure (24) displacement.

## Description

### Object of the invention

This invention refers to a device for agrochemical application which can be installed on an automatically displaceable moving structure, such device comprising a tank connected through a pump to a duct fastened on such moving structure along which duct a plurality of nozzles is arranged according to an even spraying criterion. Controlling devices provided with a memory control the performance of electrically operated valves which control the spray from such nozzles depending on the position of each nozzle or group of nozzles determined from a control of the displacement of the moving structure.

Namely, the device of this invention can be applied on the structure of a conventional automatically moving irrigation equipment either of the "pivot" type (pivoting circular displacement) or "ranger" (front displacement in parallel of the towers).

### Field of the invention

This invention has its application within the industry engaged in the manufacture of agricultural machines.

### Background of the invention

Presently, the agriculture poses requirements which determine the good results level and thus, cutting down costs is a main parameter from which essentially arises the success of the activity performed.

In this sense, the researches carried out established several requirements, among which stands out lessening the work force used and using polyvalent equipments.

As distributing the irrigation water as well as the use of fertilizer or phytosanitary liquid products constitute an essential requirement for successfully achieving the operations, it should be wished to count on equipments which make possible to efficiently spray agrochemicals making use of already existing irrigation structures.

However, dosing the kind of product mentioned results critical because values in excess can damage the crop and lower amounts means useless actions.

In addition, at the irrigation branch circuit which draw a circular motion about the rotation centre called pivots, the rainfall, that is to say, the volume per time unit, must be increasing from the centre towards the end in order that an even distribution is achieved. Typically, such evenness is achieved by implementing one of following solutions: keep a constant gap between the nozzles increasing their size when a bigger outflow is required; keep the size of the emitters decreasing the gap between them ; or matching both solutions.

Through the utility model ES-A-1013467 the existence of an irrigation machine is known having a phytosanitary action in which a main pipe is claimed aligned with the frame of the irrigation machine supported by motor- powered rolling towers from which multiple fall-pipes start connected to a secondary pipe provided with a plurality of nozzles for the product output. Each of such secondary pipes incorporates a pressure regulator and an electrically operated valve which is connected in parallel with the feed motor of related rolling tower so that the electrically operated valve opens when the frame goes forwards and closes when the frame stops. Each output nozzle in addition has available a nonleakage valve.

This device for applying agrochemicals mounted on an automatic irrigating machine allows to intermittently supply product by lengths according to the forward travel time of related rolling tower, therefore the more external lengths will have a longer spraying time than the internal lengths. However, no specific regulation is provided for each nozzle or group of nozzles for the dose to be supplied according to their position therefore the distribution of the product will be little accurate and uneven.

In patent US-A-5,678,771 a distribution system for agrochemicals is disclosed adapted to be used with an irrigation moving system and which comprises a duct for supplying liquid agrochemical supported in the irrigation system in a way that can be uprightly adjusted and which is operatively in communication with a supply of liquid agrochemical under pressure. Under the said duct for supplying liquid agrochemical and between each pair of rolling towers of the irrigation system there is located a duct for distributing liquid agrochemical which is in fluid communication with a remote control electrically operated solenoid valve which are in fluid communication with the duct of liquid agrochemical supply. At each of the distribution ducts are arranged a plurality of supplying valves, separated with an associated sprinkler the solenoid valve being driven by a control for selectively activating the distribution ducts so that the liquid agrochemical can be applied on pre-selected parts of the area on which the irrigation system is moving. At each of the emitting valves an hydraulic accumulator is associated for dosing the amount of liquid agrochemicals to be applied on the field.

This system has in addition to its construction complexity the drawback that it supplies agrochemical from all the nozzles of a length at same time, which results not appropriate in pivoting irrigation systems, namely at the areas closest to the central pivot, although the supply frequency is programmed in a different way for each length, according to its radial position with respect to the centre.

### Description of the invention

The device for applying agrochemicals proposed, which can be installed on a moving structure having an automatic displacement, shows a series of advantages which requires a detailed explanation.

First, it must be pointed out that it can be mounted on a structure of a moving, self-propelled conventional irrigation apparatus either of "pivot" or of "ranger" type.

Relating to above established, it must be pointed out that it allows to adjust the dose to the circular motion of a "pivot" type irrigation equipment.

It is also necessary to point out that the device performs an even distribution in which the variation of speeds at each length constituting the irrigation apparatus is borne in mind.

On the other hand, it is significant to mention that the device admits the collection of chemical compounds used as fertilizers, phytosanitary or cleaning agents which contributes to the achievement of a sustainable development.

In same way, it is important to point out that the control responsible of the connection and the regulation of the device is unique and simultaneously acts on the elements in charge of outputting the compound.

Also it is compulsory to refer to the fact that it is feasible to incorporate sopping units which are activated when registering unwanted values of rain, wind, excess of temperature or the slippage of the external tower.

Therefore, it is a versatile element with which it is possible to carry out an efficient and controlled performance.

The device which is disclosed is specially suitable for mounting it on a conventional "pivot" type moving irrigation equipment in which the water and the electric power are received by its end hinged on a fixed central pivot while the other end is moving and rotates with respect to the former during the supply of the irrigation water. However, the device of the invention is also applicable to a "ranger" type or front forward motion irrigation equipment.

These equipments are constituted in both cases by a structure formed by hinged rigid lengths supported on self-propelled rolling towers, each generally equipped with an electric motor and two pneumatic tires. On such structure an emitter-holder pipe is mounted connected by one of its ends to an irrigation water supply.

Thus, in the central pivot type moving irrigation equipment, the motion of the hinged structure composed of a given number of lengths is circular and is caused by the non-stop operation of the motor of the more external rolling tower and an intermittent operation of the motors of the remaining towers. As it is not a rigid structure, to keep the set of lengths substantially aligned while they rotate, an alignment mechanism exists which is responsible of the regulation of starting/stopping the motors of each of the internal towers. Such mechanism usually consists in an electric contact located between two adjacent lengths, which connects and disconnect the motor operating the corresponding rolling tower when the angle formed by such adjacent lengths exceeds pre-established limits. This way, the forward travel of the equipment is carried out by means of a motion chain reaction starting from the last length the external tower of which is continuously moving and following towards the centre with the start/stop of the tower motors. It must be pointed out that the forwards motion of the towers, when it is produced, is at a very slow speed and it can be considered constant. Therefore, the travel of a tower will be substantially proportional to the time in which the motor thereof has been operating.

Specially in "pivot" type equipments an important variation is recorded of the displacement speed of each area of a particular length depending on if it is the internal, the external motor which is operating, both jointly, or both are stopped, a moment when the length involved has no motion at all. Therefore, the amount of agrochemical to be supplied from each output nozzle will depend on the position it has reached.

Concretely, the object of this invention is constituted by a tank for agrochemical to be applied, a preferably U-shaped duct, that is to say forming a loop, connected to such tank through a pump which supplies a substantially constant pressure and sustained along a moving structure, formed by one or several lengths supported by self-propelled rolling tower of a conventional irrigation equipment, either "pivot" or "ranger" type. The said duct incorporates a plurality of spraying nozzles distributed along it at equal or unequal intervals. The nozzles are associated to electrically operated valves by electronic controlling devices which receive information on the state of the propulsion motor towers either operating or non operating. Each electrically operated valve can be associated with an individual nozzle or a group of nozzles, according to the level of accurateness it is sought to achieve and for each length of the moving structure there is a electronic controlling device to which are connected to each of the electrically powered valves of this length. All the electronic controlling devices of the device for applying agrochemicals are connected in turn in series with a control station.

Each length comprises a bar fixed on the structure by means of rings which allows a rotation but not a displacement and the duct is suspended by means of a plurality of cables fixed on such bar. A manual or motor powered driving device is provided for rotating the bar and with it wind or unwind the cables in order to regulate the height of the duct and therefore of the spraying nozzles, with respect to the floor. According to an example of embodiment, such bar from which the pipe is hanging is supported at the ends of arms fixed on the moving structure and which is extended crosswise protruding from it which allows to displace the nozzles of the moving structure shaft in order to prevent a direct contact of the agrochemicals with the rolling towers, their motors, wheels of such towers and the like. In the event of using a moving structure of a conventional irrigation equipment, such arms are joined to the duct of the conventional irrigation equipment, by means of two bolts configured for fastening a metallic plate using threads, incorporating a protecting plate between the pipe of the irrigation apparatus and the pipe sustaining the agrochemicals duct.

As the circular motion of the "pivot" requests a variation of the rainfall along the side, to achieve it product is distributed pulsed taking profit of the equipment slow forward travel of the speed , modifying the duration of the nozzles opening-closing cycle along the "pivot" length. It is possible to match, with identical purpose, the supply in a pulsed way with a variation in the gap between the emitters, decreasing the distance between emitters as they are going away from the rotation centre.

To achieve the former, low rated flow nozzles are used which operate driven by electrically powered valves with opening-closing cycles regulated by an electronic controlling device. Bearing in mind that the apparatus moves forwards length to length by means of a series of connection-disconnections of the motors operating it, the electronic controlling device regulates that the time of application of the product is computed and occurs only and solely with the external motor of such length is connected. Thus, when such motor is connected the pulses associated to it begins and if the motor is stopped the device also stops but it memorizes the state of the electrically powered valve which allows that when such motor is newly started , the interrupted pulse goes on. The time of opening the electrically powered valves is constant while the frequency, that is to say, the time in which they remain closed is variable and depends on the position reached by the nozzle or the group of nozzles driven by the electrically powered valve determined from the information about the forwards motion of the tower.

According to a second example of embodiment, in which the control unit receives information on the motion of the two wheels of each length, as well when they operate jointly as when one of them operates as when both lack of motion. This allows a more accurate calculation of the position of each nozzle or group of nozzles associated to an electrically powered valve.

### Description of the drawings

To provide a complement to the description which is being carried out and in order to assist to a best understanding of the characteristics of the invention, to this specification it is appended as an integral part thereof, four drawing sheets in which for illustration and no limiting purpose representing following:
Fig. 1 shows a side elevation view of the device for applying agrochemicals which can be installed on an automatic displaceable moving structure in which it is possible to note the elements constituting it as well as their arrangement.
Fig. 2 shows a front view with which the position occupied by the parts integrating the structure fastening the duct of the agrochemicals can be seen;
Fig. 3 shows a detail of the fastening structure, where the position of the bolts is disclosed as well as that of the plate protecting the duct of the "pivot" from too high pressure values.
Fig. 4 determines a detail complementary to the former in which the junction of the pipe with rings can be seen, with the shaft from which the supporting cable of the agrochemical duct is suspended.
Fig. 5 shows a diagram where finish the starting pushbuttons, controllers, electrically powered valves outputs and motors;
Fig. 6 is a diagram showing the agrochemical fluid distribution circuit matched with the control elements;
Fig. 7 is a front view analogous to that of Fig. 2 but showing an alternative example of embodiment of fastening the device on the moving structure; and
Fig. 8, 9 and 10 are diagrams explaining the regulation of the product supply by controlling the opening/closing cycles of the electrically powered valves.

### Preferred embodiment of the invention

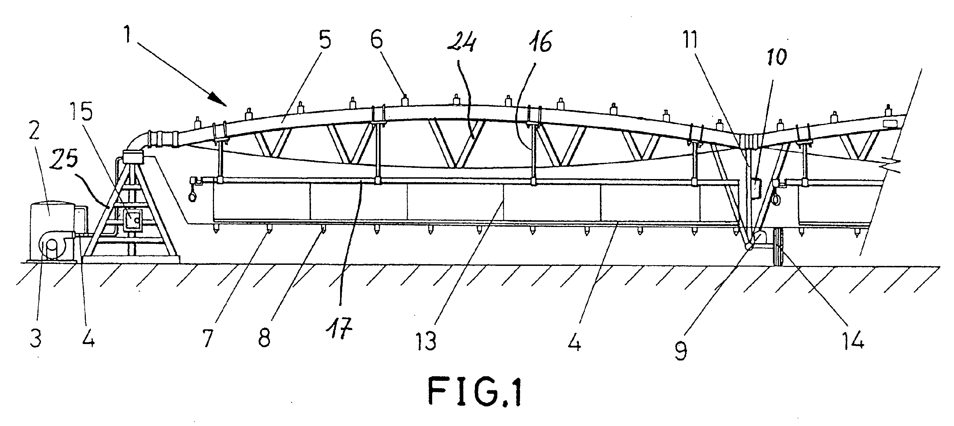

Referring first to Fig. 1, it shows the device for applying agrochemicals of this invention installed on a moving structure 24 of a "pivot" type irrigation equipment 1 comprising several rigid lengths hinged to each other and sustained by rolling towers 11 provided with an electric motor 9 which drives wheels 14. A free end of a final length is hinged on a central pivot 25. The structure 24 supports an irrigation pipe 5 provided with irrigation nozzles 6 distributed along it. At the pivot area 25, the irrigation pipe 5 is connected to a irrigation liquid supply. Also at such area occurs the takeoff for the propulsion engines and control equipments.

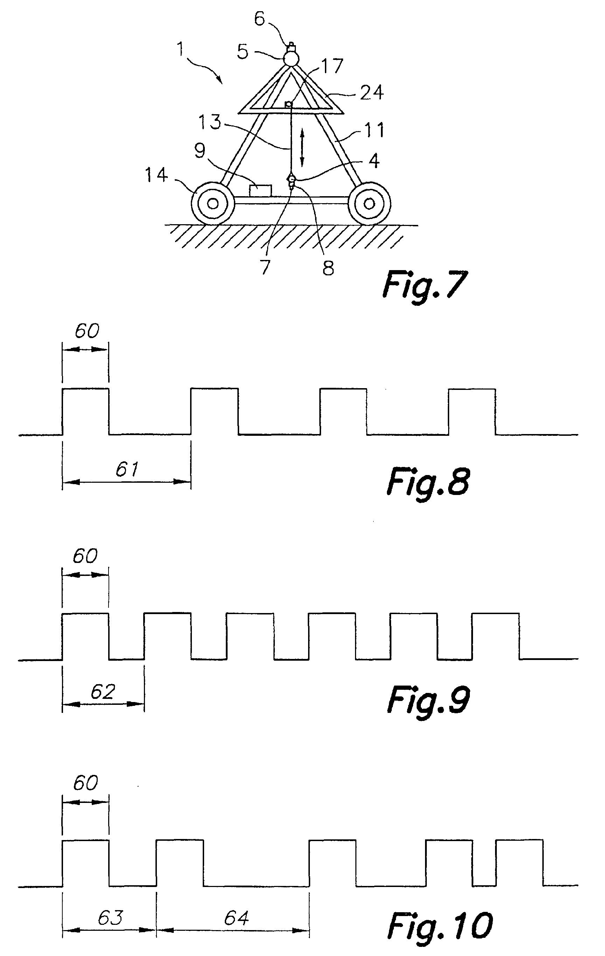

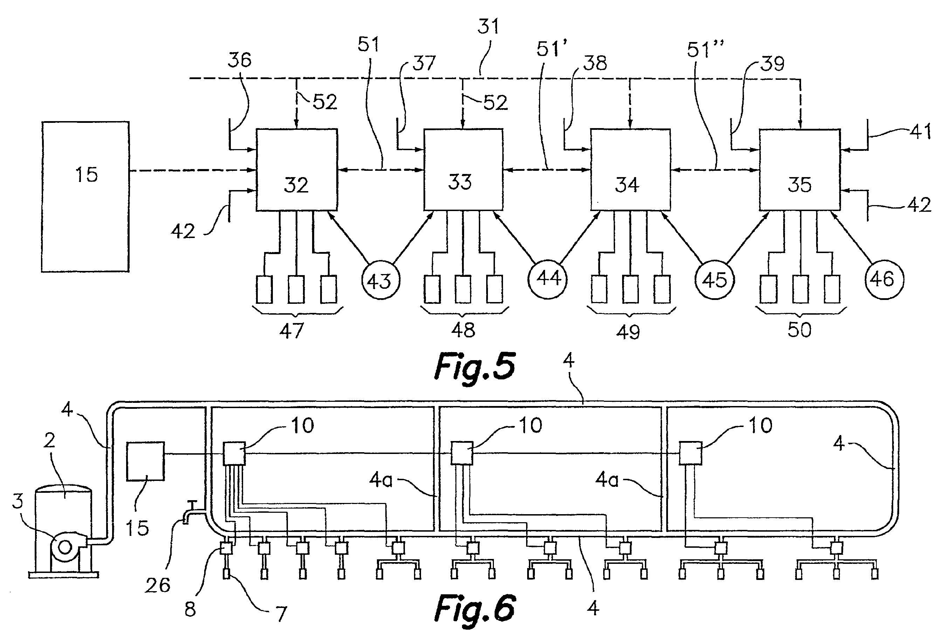

The device for applying agrochemicals of this invention is composed of a tank 2 located at the end of the irrigation structure hinged on the pivot 25. From this tank 2, the agrochemical products are extracted with a pump 3 and directed under a substantially constant pressure to a duct 4 incorporating a plurality of U-shaped spraying nozzles 7 distributed along it. The duct 4 is U-shaped, that is to say that it forms a loop (see Fig. 6). Such duct 4 travels along the "pivot" from the area connecting to the tank 2 to its end area and comes back from such point to the initial area, with which it is possible, on the one hand, that the liquid enters through the two ends and therefore to make even the pressure and thus the evenness along such nozzles 7 which supply agrochemical, and on the other hand, after finishing the treatment, cleaning with water pumping at one end and dewatering at the other one, collecting at the initial part the cleaning liquid used through a blowoff cock 26.

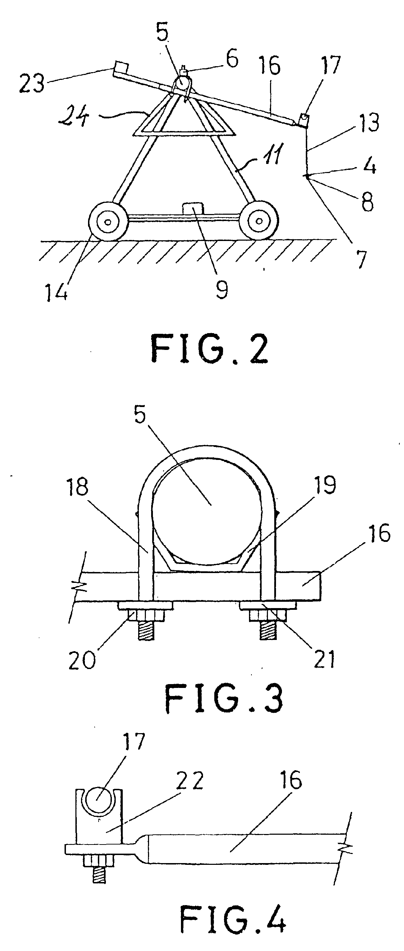

According to a variation of embodiment shown at Fig. 2, that pipe 4 bearing the nozzles 7 is sustained on a fixed structure on the duct 5 of the irrigation equipment on which are distributed the nozzles 6 supplying water. Such sustaining structure is constituted of metallic tubular arms 16 which support at one of their ends overhanging a shaft or bar 17 from which start wire cables 13 which support the agrochemicals duct 4. Such arms 16 are fastened on pipe 5 conducting the irrigation liquid and can be located at the position which is best fit for the product application to be carried out. However and in order to prevent the twisting effect which is produced at the irrigation equipment subsequently to the weight of the applying device 1, the arm 16 has a counterweight 23 which overcomes the unwanted effect. Also, such arms structure 16 positions the said duct 4 at a regulable height with respect to the level of the floor and at a given distance in elevation from the water conducting shaft 5 overcoming the drawbacks provoked by the contact of the chemical compounds with the conduction tower 11, the motors 9, the wheels 14 and the like.

As Fig. 3 shows, for fixing the arms 16 there is U-shaped bolts 18 made of metallic material located on the duct 5 of the irrigation equipment. Such bolts 18 have threads 20 at their ends designed to fix the metallic plate 21 which exerts the pressure required to fasten the arm 16. However, between such arm 16 and the water duct 5 a metallic plate 19 is included which prevents that the pressure which is transmitted deforms such pipe 5. Fig. 7 shows other variations of embodiment in which the bar 17 is directly supported on the structure 24 so that the pipe 4 remains suspended at a substantially centred position with respect to such structure 24.

This way, the elements disclosed in above paragraphs allow to horizontally fasten the bar 17 at the free ends of the arms 16, parallel to the length of the irrigation side making use of fastening members 22 (see Fig. 4) which allow that the bar 17 rotates but without displacement. As it is necessary to deal with different crops or acting at different steps of the growth of a concrete one, the height of the nozzles 7 from the floor must be regulated. Therefore, by hand, length by length, the bar 17 is rotated to wind on it the cable 13 from which is hanging the duct 4, using a cranked handle or the like on which the operator acts. With identical aim, it is feasible that the regulation is carried out rotating the bar 17 driven by a motor optionally driven through an electric device.

To achieve the required evenness when applying the product along the moving structure 24 of the irrigation machine, which is submitted in this example to a circular motion, an assembly of elements for distributing the fluid and electronically controlled which are explained below with reference to Fig. 5 and 6.

According to the slow forward travel speed of the "pivot" nozzles 7 are used having a low rated flow which carry out a regulated supply through electrically powered valves 8 which operate according to opening-closing cycles controlled by a control device 10. Preferably, each length of the structure 24 includes one of such electronic controlling devices 10 to regulate the opening-closing of several electrically powered valves 8 located on such length, each being responsible of the passage of the agrochemical liquid to a nozzle or group of nozzles 7.

As the speed varies along the irrigation side, the nozzles 7 located at the external area moving with higher values than those located at the internal position, their time of global opening state will be longer. However, according to a preferred example of embodiment which will be explained below with reference to Fig. 8 and 9, the time during which the electrically operated valves are open during each opening-closing cycle, is constant and corresponds to a predetermined dose depending on the crop, the design of the machine and the agrochemical to be used, while the electronic controlling devices 10 regulate the frequency of application of such dose depending on the position of the nozzles, which is determined from the information of activation-deactivation of the motors for the lengths of the moving structure 24 forward motion.

Preferably, at the first lengths where the higher variations of speed occur, each electronic controlling device (10) regulates a small number of nozzles 7 opening-closing while at the more external lengths the terms are inverted. This is exemplified in Fig. 6 in which the duct 4 travels from the pump 3 connected to the tank 2, along all the moving structure (not shown in Fig. 6) and comes back to the start drawing a "U" with a closed loop. At each rolling tower (not shown in Fig. 6) there is a duct 4a which communicates the two lengths of the loop.From one of the lengths of the duct 4 start the nozzles 7 controlled by corresponding electrically powered valves 8. In the example illustrated, the nozzles 7 are distributed at regular intervals along the path. At the areas closest to the pivot, that is to say, at the place where the tank 2 is located, each nozzle 7 is regulated by an electrically powered valve 8, while as they are farther away, the electrically powered valves 8 control groups having every time a greater number of nozzles 7. At each length, there is provided a electronic controlling device 10 which individually controls each of the electrically controlled valves 8 of the length. At the central area of the device, there is a control station 15 connected to the electronic controlling device 10 of the first length, and this is connected in series to the following ones. Such control station 15 drives the connection-disconnection conditions of the electronic controlling devices 10 and it is at that point where the dose selected for each concrete case is determined. The communication between this control station 15 and the different electronic controlling devices 10 occurs through wiring.

The electronic controlling device 10 is activated when it receives a ignition signal corresponding to the running of the controlled length external motor 9 and from such moment, a process of the electrically powered valves 8 opening-closing pulses process starts. When it receives the signal from the length external motor, it estimates an average speed of the length end during the displacement of the external wheel, from which it calculates the positions of the nozzles during the displacement and opening and closing times or preferably, pulsing frequencies of the electrically powered valves 8 which control the passage of the product, irrespectively of the displacement which is produced when the internal wheel of the length moves forwards and the external is stopped.

In addition, each electronic controlling device 10 has a memory which allows it to detect the stop of the ignition signal so that the electrically powered valves 8 opening-closing step is interrupted and when it newly receives the ignition signal the cycle proceeds at the point where it was interrupted, without newly initiate.

It is obvious that other devices could be used such as a detector of the motion of one of the towers supporting the length, instead of the motor ignition signal, but this later was chosen because it is simple to be technically implemented.

Disconnecting the device 1 can be carried out by hand or automatically in the event there exists unfavourable external conditions. For this, a rainfall detector, a pressure sensor, an anemometer, an element for detecting the wheels slippage or other detectors release a signal which provoke the stoppage of the application when unsuitable conditions occurs.

A second embodiment is also feasible in which the entry of the controller 15 is the signal of the length two external and internal motors 9.

In this case, the speed of displacement of each pivot length area is more accurately is known, applying to each nozzle 7 or group of them the duration of the suitable pulse or the suitable frequency, avoiding that the different applications overlap and modifying the opening-closing intervals according to the distance travelled by each nozzle 7 or group of them at every moment.

As it was said, according to which is the accuracy level proposed as target, it is possible to determine the control of the duration of the interval of the electrically powered valves 8 opening-closing, individually for each nozzle 7 or jointly for each group, resulting more or less accurate, respectively.

It must be pointed out that for due purposes, according to Fig. 5 that the invention has starting push-buttons 36, 37, 38, 39 and 40, which are designed to have the electrically powered valves 47, 48, 49 and 50 located in pertinent areas and of course before starting the spraying process in order that the air goes out of the pipes, so that when the first spraying occurs the liquid exit is secured. Still according to same Fig. 5 the existence of a feeding line 31 can be noted which communicated through conductors 52 with the controllers 32, 33, 34 and 35 (to which it was referred above with electronic controlling devices 10) which are communicated to each other by communication lines 51, 51' and 51". The controller 32 of the first length is connected with a control station 15. The controllers 32, 33, 34 and 35 achieve that the performance of the motors 43, 44, 45 and 46 (referred above as motors 9), the exit to the electrically powered valves 47, 48, 49 and 50 (which were above referred as electrically powered valves 8). There also exists a control of dose 42 from the control station 15 and signals coming from the alarm detectors 41.

The preferred embodiment of the electrically powered valve 8 pulses regulation is explained with reference to the graphics of Fig. 8 and 9. It will be noted that in both graphics the time of open state 60 is constant while the frequencies 61, 62 are different. This is due to the fact that the time of open state 60 is a constant and corresponds to an estimated dose per unit of land and which is determined according to parameters such as the configuration of the device, the kind of crop and the agrochemical product to be applied. The parameter corresponding to the time of open state 60 (dose) is stored at the control station 15. On the contrary, the frequencies 61, 62 are determined by the electronic controlling devices 10 for each electrically powered valve 8 depending on the estimated position of the nozzle or group of nozzles 7 associated to it during the displacement of the moving structure 24. Such positions are determined from the information received on the activation-deactivation state of the motors 9 of the rolling towers 11.

Thus, the graphic of the Fig. 8 corresponds to an electrically powered valve 8 located at the area close to the central pivot 25, which sweeps a proportionally small area of land therefore the frequency 61 with which the pulses 60 occur is lower than the frequency 62 with which the pulses 60 occur in the graphic of the Fig. 9, which corresponds to an electrically powered valve 8 located at an area far away the central pivot 25 which therefore sweeps a much wider area of land.

It must be borne in mind that the electronic controlling devices 10 may vary the frequency between the pulses so often as the variations in the forwards travel of the moving structure 24 requires it. For example, the graphic of Fig. 10 corresponds to an electrically powered valve 8 located in the area which is sustaining an uneven forwards travel and therefore, the frequency 63 of the first cycle is different from the frequency 64 of the second cycle and so on, while the time of the open state 60 remains constant.

It is not deemed necessary to extend longer this description in order that any man of the art comprises the scope of the invention and the advantages thereof arise concreted in following claims.

## Claims

1. Device for agrochemical application which can be installed on a moving structure (24) such as a moving irrigation equipment (1), such moving structure (24) is of the kind comprising at least a high length sustained by its two ends, at least one of such ends being supported by a rolling tower (11) self-propelled by wheels (14) driven by a motor (9), such rolling tower, which is at least one, can be intermittently displaced and when it moves it is at a substantially constant speed, **characterized in that** it has available a series of nozzles (7) suitable for spraying agrochemicals, located at a constant or variable distance along such moving structure, such nozzles being in communication with a duct (4) and with a supply regulated by electrically powered valves (8) which operate according to opening-closing cycles controlled by electronic controlling devices (10) of supply timing from the release of a signal relative to the moving structure (24) displacement.

2. Device according to claim 1, **characterized in that** such moving structure (24) comprises several hinged lengths the contiguous lengths being adjacent and at least a free end of a first final length sustained by such rolling towers (11) and where during the operation the motor (9) driving the rolling tower (11) of the said free end which is at least one, is permanently connected and at the hinges between lengths there exists electric devices which connect and disconnect the motor (9) driving the corresponding rolling tower (11) when the angle formed by the adjacent lengths sustained by it exceeds preestablished limits in order to provide the lengths generally aligned forwards travel, at least one of such electronic controlling devices (10) are arranged on each length and a control unit (15) located at a end of the moving structure (24) which handles the connection-disconnection conditions of the timing electronic controlling devices (10) and the dose wished.

3. Device, according to claim 2, **characterized in that** such moving structure (24) is of the pivoting kind in which the free end of a second final length is hinged on a fixed central pivot (25) through which it received the supplies of fluid and power while the free end of such first final length rotates about such pivot (25).

4. Device according to claim 2, **characterized in that** such moving structure (24) is of the kind having a forwards motion in parallel where the free end of a second final length is also sustained by a rolling tower (11).

5. Device, according to claim 2, **characterized in that** each timing (10) electronic controlling device regulates the opening-closing of the electrically powered valves (8) responsible of the agrochemical liquid passage to groups of nozzles (7) using as activation signal of the controller the ignition of the external motor (9) of the controlled length, incorporating a memory for detecting the stop of the signal of the motor ignition, interrupting the activation-deactivation sequence and after once again receiving the ignition signal, proceeding with the spraying cycle at the point at which it was interrupted without newly initiating.

6. Device, according to claim 2, **characterized in that** each length controller (10) regulates the electrically powered valves (8) opening-closing from signals coming from the two motors of the length involved, being controlled in real time the displacement of each nozzle or group of nozzles and determining the right time for spraying.

7. Device, according to claim 5 or 6, **characterized by** a constant gap between the nozzles (7) along each length of the moving structure (24).

8. Device, according to claim 5 or 6 **characterized by** a distribution at uneven gaps between the nozzles (7) along the different lengths of the moving structure (24).

9. Device, according to claim 2, **characterized in that** it comprises an automatic disconnecting device of the moving structure (24) drive including one or several of the following elements:a rainfall detector, a pressure sensor, an anemometer, an element for detecting the wheels slippage 14 or other detectors release a signal which provokes the stoppage of the application when unsuitable conditions occurs.

10. Device, according to claim 5 or 6, **characterized in that** the control of the electrically powered valves (8) opening-closing is carried out individually and each of them is associated to a nozzle (7) or to a group of nozzles (7) depending on the accuracy level wished.

11. Device, according to claim 2, **characterized in that** such duct (4) is connected to a tank (2) or product intake to be applied through a pump (3) which supplies a substantially constant pressure, such tank (2) or product intake to be applied close to an end of the moving structure (24) where such duct (4) runs along the moving structure (24) from the connection area to its end area and comes back from such point to the initial area, making possible that the pressure is even along the nozzles (7) and cleaning with water, collecting the cleaning liquid used through a blowoff cock (26).

12. Device, according to claim 2, **characterized in that** it comprises at each length at least a bar (17) fastened along its moving structure (24) by means of members (22) which allows a rotation but not a displacement, the duct (4) being suspended by a plurality of cables (13) fixed on such bar (17) a hand or motor powered driving device being built-in to rotate the bar (17) and with it winding or unwinding the cables (13) in order to regulate the height of the duct (4) and therefore of the nozzles (7) with respect to the floor as well as the spaying area covered by each nozzle (7).

13. Device, according to claim 12, **characterized in that** it comprises arms (16) fixed on the moving structure (24) and which are extending crosswise protruding from them, such arms (16) supporting at their ends the said bar (17) overhanging from which is hanging the pipe (4) which allows to displace the nozzles (7) from the shaft of the moving structure in order to prevent a direct contact of the agrochemicals with the rolling towers (11), their motors (9) wheels (14) and other components.

14. Device according to claim 13, **characterized in that** each arm (16) has available a counterweight (23) which overcomes the unwanted twisting effect on the fastening part on the moving structure.

15. Device, according to claim 13, **characterized in that** such moving structure (24) is the moving structure of a "pivot" kind irrigation equipment (1) on which a duct (5) is fixed which bears nozzles (6) supplying irrigation water, where the duct (4) of agrochemicals is independent from the irrigation equipment (1) and where the said arms (16) supporting the said bar (17) are fastened on the duct (5) of the irrigation equipment by means of U-shaped bolts (18) made of metallic material, provided with threads (20) at their ends for fixing a metallic base plate (21) between the arms (16) and the irrigation water duct (5) a plate (19) being fixed which prevents that the pressure transmitted deforms the said duct (5).

16. Device, according to claim 5 or 6, **characterized in that** such electronic controlling devices (10) operate individually controlling each electrically powered valve associated to one or several nozzles, distributed along each length, so taht at their opening-closing cycles the opening periods have a constant duration while the frequency thereof is determined for each electrically powered valve (8) depending on the function of the position with respect to the floor of the nozzle or group of nozzles (7) regulated by it, such position being deducted from such information on the moving structure (24) displacement.
